Europäisches Patentamt

European Patent Office

Office européen des brevets

(19)

(11) Publication number: **0 351 019**

**A1**

(12)

# EUROPEAN PATENT APPLICATION

(21) Application number: **89201840.9**

(51) Int. Cl.⁴: **F16L 55/172**

(22) Date of filing: **11.07.89**

(30) Priority: **14.07.88 NL 8801789**

(43) Date of publication of application:
**17.01.90 Bulletin 90/03**

(84) Designated Contracting States:
**AT BE CH DE ES FR GB GR IT LI LU NL SE**

(71) Applicant: **ROMACON B.V.**
**Huiskensstraat 68**
**NL-5916 PN Venlo(NL)**

(72) Inventor: **Rijpkema, Jacobus Antonius**
**Christoffel Marie**
**Nijverheidsstraat 3**
**NL-5961 PJ Horst(NL)**

(74) Representative: **Timmermans, Anthonius**
**C.Th., Ir. et al**
**European Patent Attorneys Octrooibureau**
**Zuid P.O. Box 2287**
**NL-5600 CG Eindhoven(NL)**

(54) Repair clamp and closing means for use in said repair clamp.

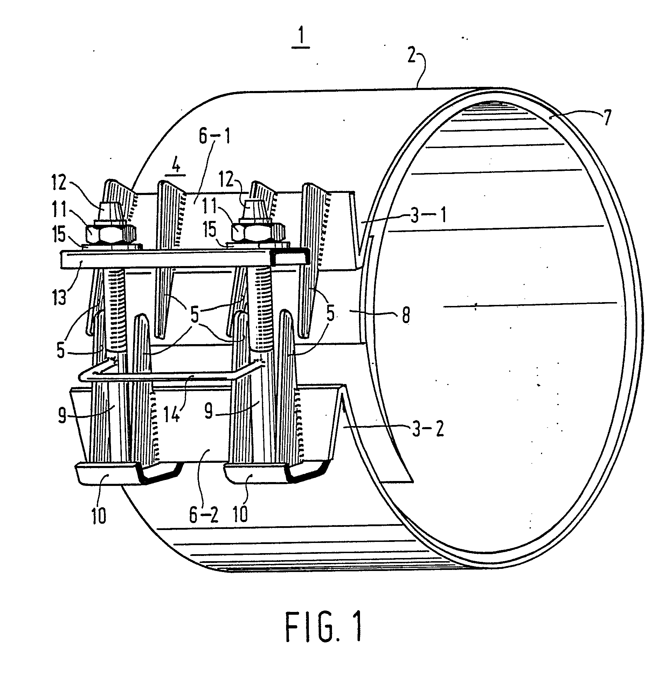

(57) In Fig. 1 there is shown a repair clamp 1, comprising a clamping strap 2 having ends 3-1 and 3-2, being provided with opposite pairs of fingers 5. Closing of the clamp 1 is achieved with closing means 4. The means 4 can be detachably provided round the engaging fingers 5, whereby they are pivotally supported by the fingers 5. The closing means 4 comprises bolts 9 with a hinge plate 10 at one ends and a lock plate 13 at the other ends of the bolts. Both plates 10 and 13 are hooked on the ends 3-1 and 3-2 of the strap 2. A bracket 14 holds the individual bolts 9 together.

FIG. 1

EP 0 351 019 A1

## Repair clamp and closing means for use in said repair clamp.

The invention relates to a repair clamp, comprising a clamping strap built up of at least one clamping strap part provided with ends which can be held together by means of a closing means.

Such repair clamps, generally made of stainless steel, are used for permanently repairing pipe fractures or holes. For that purpose the clamp is provided round the pipe at the spot in question and then clamped round the pipe with a suitable closing means, which generally contains one or several bolts. The clamps are widely used with water, gas and oil pipes as well as with other kinds of pressure pipes. The repair clamp, which is available in various diameters and widths, has a clamping strap which may consist of one part, two parts or possibly of a plurality of parts, if desired.

One generally known repair clamp has one or several bolts, which are welded on one end of the clamping strap part, and has a bend provided at the other end of the clamping strap part, on which there are provided radially extending parallel fingers. The bolt is provided with a lock plate which can be hooked on the fingers on the bend for support by said fingers. Then the clamp can be fixed on the pipe by means of a nut on the bolt.

A disadvantage of the known repair clamp is that when the clamp is bent open the clamping strap ends must be opened out far, because the welded bolts reduce and partly block the opening between the ends, which makes it difficult to provide the clamp round the pipe. This has appeared to be a great disadvantage, as in several densely populated cities the pipes generally lie very closely together and sometimes there is even very little room available between the pipes for pulling the ends of the clamping strap far apart when the clamp is being provided round the pipe. A further disadvantage of the known repair clamp, which especially manifests itself with clamps having a small diameter, is that when the lock plate is hooked on the bend a radially inwardly directed force must be exerted on the lock plate and on the bolts, against the rigidity of the clamping strap.

The purpose of the invention is to provide a repair clamp which can be produced in a simple manner, whereby providing the clamp round the pipe requires little more room than is necessary for moving the pipe through the ends, and whereby it is not necessary to exert a radially inwardly directed bending force on the lock plate and the bolts when the clamp is being closed.

For that purpose the repair clamp according to the invention is characterized in that the respective ends are provided with fingers which can be brought into engagement with one another, and that the closing means can be detachably provided on the engaging fingers.

The advantage of the repair clamp according to the invention is that when the fingers, which are in engagement with one another, are pressed together, corresponding pairs of fingers are automatically guided and centred. Besides, the repair clamp according to the invention can be produced in a simpler manner, as the respective ends of the clamping strap part have in principle identical constructions.

One embodiment of the repair clamp according to the invention is characterized in that the closing means is pivotally supported by a relevant end of the fingers.

By making the closing means of the repair clamp according to the invention at the same time detachable and pivotal between the engaging fingers, a further simplification in the mounting of the clamp on the pipe is achieved.

The invention will be further explained with reference to a drawing, in which corresponding reference numbers indicate corresponding elements. In the drawing:

Figure 1 is a preferred embodiment of the repair clamp according to the invention;

Figure 2 is a partial cross-section of the repair clamp of Figure 1, seen near the closing means; and

Figure 3 is a front view of the closing means for use in the repair clamp according to the invention.

'Figure 1 illustrates a repair clamp 1 which comprises a clamping strap 2. At its ends 3-1 and 3-2 said clamping strap is provided with a closing means 4. Multipart repair clamps contain several closing means 4, whereby the clamping strap is built up of a plurality of clamping strap parts. The clamp 1 is bent open by opening out the ends 3-1 and 3-2 and providing them round a pipe to be repaired (not shown).

At the location of each of the ends 3-1 and 3-2 pairs of radially projecting parallel fingers 5 may be provided, e.g. by means of welding, on a carrier plate 6-1, 6-2 formed by bending. The opposite pairs of fingers 5 are provided spaced from each other by different mutual distances such that they can be brought into engagement with one another. For this purpose a rubber inner jacket 7, provided on the inner side of the clamping strap 2, which is generally provided with a honeycomb profile, is pressed on the pipe. The rubber inner jacket 7 is pointed toward the ends, near the ends 3-1 and 3-2. A bridge plate 8 is provided between the ends 3-1 and 3-2. This makes an even and adequate sealing possible.

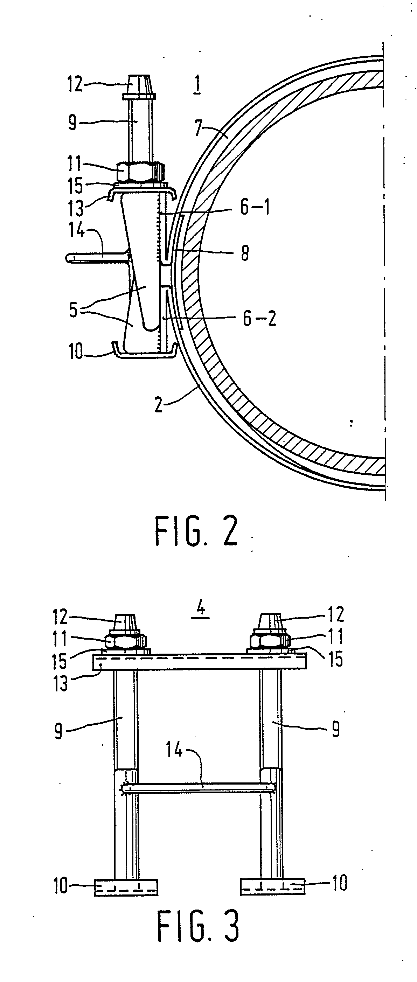

The embodiment of the closing means 4 is illustrated in detached condition in Figure 3. This embodiment shows a closing means having two bolts. Dependent on the used width of the repair clamp and dependent on its use, it will also be possible to use closing means comprising more than two bolts. These are not shown.

The closing means 4 comprises two bolts 9. At one head end the bolts 9 are provided with a hinge plate 10. One and the same hinge plate 10 may also extend across the two head ends of the bolts 9; this requires more plate material, however. On the other side the bolts 9 contain screw thread with nuts 11 and a cap 12 thereon. On the joint bolts 9 there is furthermore provided a lock plate 13. The two bolts 9 are mutually rigidly coupled by means of a bracket 14.

The closing means 4 is constructed such that it makes it possible to close the put-together ends 3-1 and 3-2 in a simple manner. When the clamp is being closed the hinge plates 10 are hooked behind the fingers 5 of the carrier plate 6-2. The repair clamp 1 is closed by stopping the other carrier 6-1 and by lifting the lock plate 13 over the fingers 5 and the carrier plate 6-1. When the clamp is being closed it is thus not necessary to exert a radially inwardly directed bending force on the clamping strap 2. The bracket 14 will hold the individual bolts 9 together, so that it will not be necessary to provide the bolts 9 separately, but in addition it makes it possible to enable the hinging movement of the closing means in a simple manner. After the nuts 11 have been tightened a final situation of the clamp 1 and the closing means 4 is created, as is illustrated in Figure 2.

The symmetric construction of the repair clamp 1 in principle allows that the closing means 4 is used in a manner whereby it is provided on the carrier plates 6-1, 6-2 in a reverse manner as that illustrated in Figure 1. This greater freedom of closing the clamp 1 is of particular importance when using the clamp 1 in places with very little room between the pipes.

In an alternative embodiment (not shown) of the repair clamp 1 the hinge plate 10 is welded on the fingers 5 and on one of the carrier plates 6-1 or 6-2. The heads of the bolts 9 pass through a hole in the carrier plate in that case, whilst on the other side of the hole the bracket 14 is present. As a result of this the closing means 4 cannot be spatially separated from the repair clamp 1, but it can be detachably provided around the engaging fingers 5.

The holes in the hinge plate 10 must have such a width in that case, however, that it remains possible to hinge the bolts slightly radially. A further function of the bracket 14 is finally to prevent that the bolt 9 in question rotates when the nuts 11 are being tightened. A washer 15 will generally be provided between the nut 11 and the lock plate 13.

## Claims

1. Repair clamp, comprising a clamping strap built up of at least one clamping strap part provided with ends which can be held together by means of a closing means, characterized in that the respective ends are provided with fingers which can be brought into engagement with one another, and that the closing means can be detachably provided round the engaging fingers.

2. Repair clamp according to claim 1, characterized in that the closing means is pivotally supported by a relevant end of the fingers.

3. Repair clamp according to claim 1 or 2, characterized in that the closing means comprises at least one bolt with a hinge plate, whereby the hinge plate is provided on the head end of the bolt, transversely to its longitudinal axis.

4. Repair clamp according to claim 3, characterized in that each of the ends of the clamping strap part is provided with a carrier plate, which lies in a longitudinal plane which is in contact with the clamping strap, that the fingers are provided on the respective carrier plates and that the carrier plate in question and the fingers provided thereon end at the head end of the bolt, in the plane of the hinge plate, and at the other end of the bolt in a plane of a lock plate of the closing means.

5. Repair clamp according to claim 3 or 4, characterized in that several bolts of the closing means are mutually rigidly connected by means of a bracket.

6. Repair clamp according to claim 1, characterized in that at one end of a clamping strap part there is provided a cross plate between fingers of the same pair, whereby a bolt is passed through a hole in the cross plate, and several bolts of the closing means are mutually rigidly connected by means of a bracket.

7. Closing means suitable for use in the repair clamp according to any one of the claims 3 - 6.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 103 698 (SYDDAL ENGINEERING) * Abstract; figures * | 1 | F 16 L 55/172 |
| A | EP-A-0 186 728 (MAGE AG) * Abstract; figures * | 1 | |
| A | GB-A-1 267 580 (SMITH-BLAIR INC.) * Figures * | 1 | |

TECHNICAL FIELDS SEARCHED (Int. Cl.5)

F 16 L

The present search report has been drawn up for all claims

| Place of search | Date of completion of the search | Examiner |
|---|---|---|
| THE HAGUE | 09-10-1989 | BARTSCH A.W. |